(19) Europäisches Patentamt
European Patent Office
Office européen des brevets

(11) **EP 3 923 389 A1**

(12) **EUROPEAN PATENT APPLICATION**

(43) Date of publication:
**15.12.2021 Bulletin 2021/50**

(21) Application number: **21152812.0**

(22) Date of filing: **21.01.2021**

(51) Int Cl.:
***H01M 8/1072*** *(2016.01)*
***C25B 9/23*** *(2021.01)*
***H01M 8/1025*** *(2016.01)*
***H01M 8/1027*** *(2016.01)*
***H01M 8/1032*** *(2016.01)*
***H01M 8/106*** *(2016.01)*
***H01M 8/18*** *(2006.01)*
*H01M 8/1018 (2016.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.06.2020 KR 20200070694**

(71) Applicant: **Korea Institute of Science and Technology**
**Seoul 02792 (KR)**

(72) Inventors:
- **HENKENSMEIER, Dirk**
  **02792 Seoul (KR)**
- **JANG, Jong Hyun**
  **02792 Seoul (KR)**
- **PARK, Hee-Young**
  **02792 Seoul (KR)**
- **PARK, Hyun S.**
  **02792 Seoul (KR)**
- **KIM, Hyoung-Juhn**
  **02792 Seoul (KR)**
- **LEE, So Young**
  **02792 Seoul (KR)**
- **NAJIBAH, Malikah**
  **02792 Seoul (KR)**
- **YOON, Chang Won**
  **02792 Seoul (KR)**
- **HAN, Jonghee**
  **02792 Seoul (KR)**

(74) Representative: **advotec.**
**Patent- und Rechtsanwaltspartnerschaft Tappe mbB**
**Widenmayerstraße 4**
**80538 München (DE)**

(54) **COMPOSITE ION-EXCHANGE MEMBRANE, METHOD OF PREPARING THE SAME, AND USE THEREOF**

(57) The present invention relates to a method of preparing a composite ion-exchange membrane supported with a porous polymer material, a composite ion-exchange membrane prepared by the method, and a use thereof.

[FIG. 4]

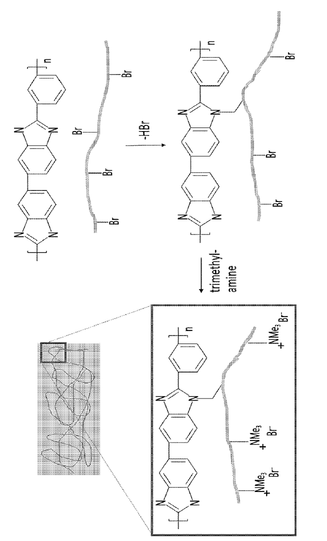


EP 3 923 389 A1

## Description

### [Technical Field]

The present invention relates to a method of preparing a composite ion-exchange membrane supported with a porous polymer material, a composite ion-exchange membrane prepared by the same, and a use thereof.

### [Background Art]

Electrochemical devices (*e.g.,* fuel cells, electrolyzers, flow batteries, *etc.*) use an ion conductive membrane to separate the anode and the cathode. In these systems, the membrane is in direct contact with liquid water (a vanadium redox flow cell, a water electrolyzer) or with moist gas (a fuel cell). In the ion conductive membrane, a hydrophilic domain absorbs water and thus responds to changes in relative humidity by swelling or shrinking. In addition, being in constant contact with water, the hydrophilic domain expands as the temperature increases and contracts as the temperature decreases in response to changes in temperature. Macroscopically, the hydrophilic domain induces swelling and contraction of the membrane.

The swelling and contraction of the membrane are major causes of membrane degradation in electrochemical cells, and in particular, the changes in the membrane plane are detrimental. For example, in fuel cells, the membrane is clamped between bipolar plates with channels engraved thereon. Under the lands, membrane swelling and contraction are strongly limited. However, in the channel region, the swelling induces expansion of the membrane area, allowing it to have a wavy structure. Since the catalyst layer swells less than the membrane, in-plane expansion can delaminate the membrane electrode assembly. Moreover, when the membrane swells more than the catalyst layer attached thereto, cracks may be formed in the catalyst layer. These initial cracks can propagate to the membrane.

### [Disclosure]

### [Technical Problem]

The present inventors have made extensive efforts to provide a membrane with reduced dimensional changes due to swelling by water uptake. As a result, they have discovered that a composite ion-exchange membrane supported with a porous polymer material, which is prepared by allowing a porous support made of a polymer comprising a reactive amine group to be brought into contact with a polymer comprising a haloalkyl group followed by a reaction with a tertiary amine compound, shows excellent dimensional stability, thereby completing the present invention.

### [Technical Solution]

A first aspect of the present invention provides a method of preparing a composite ion-exchange membrane supported with a porous polymer material, comprising: Step 1, in which a porous support made of a polymer comprising a reactive amine group is brought into contact with a polymer comprising a haloalkyl group; and Step 2, in which an intermediate obtained from Step 1 is reacted with a cation precursor compound to introduce a cationic functional group to the haloalkyl group, which is not reacted in the previous step.

For example, the porous support made of a polymer comprising a reactive amine group may be in the form of a porous mat prepared by electrospinning the polymer comprising a reactive amine group.

Furthermore, the porous support may have a porosity of 30% to 90%, specifically, 40% to 75%, but is not limited thereto.

As described above, the porous support, by having the form of a porous mat, is able to sufficiently accommodate the polymer comprising a haloalkyl group within its pores rather than contacting the polymer only through its surface.

For example, the polymer comprising a reactive amine group may be selected from the group consisting of polybenzimidazole (PBI), polybenzoxazole, poly(pyridine), poly(pyrimidine), polyoxadiazoles, polyquinolines, polyquinoxalines, polythiadiazoles, polytriazoles, and derivatives thereof. Specifically, the polymer comprising a reactive amine group may be PBI or polybenzoxazole, but is not limited thereto. The polymer may be provided in the form of a porous mat, but the polymer is not limited to those exemplified above, as long as it comprises a reactive amine group that can form a covalent bond by reacting with a haloalkyl group.

For example, the polymer comprising a haloalkyl group may be a bromoalkylated or chloroalkylated polymer. Specifically, the polymer comprising a haloalkyl group may be a bromoalkylated polysulfone polymer (PSU, Udel®), a polyphenylsulfone polymer (PPSU, Radel®), polyphenylene, polystyrene, a terphenylene polymer, a derivative thereof, or a copolymer thereof. However, the polymer of the present invention, which comprises a haloalkyl group, is not limited as long as it comprises a haloalkyl group, can be dissolved in an organic solvent, and can be used as an anion-exchange

material by reacting with an amine. More specifically, the polymer comprising a haloalkyl group may be a bromoalkylated *meta*-terphenylene polymer (mTPBr) represented by Formula 1 below.

[Formula 1]

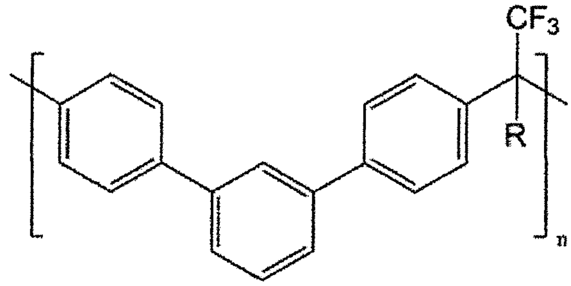

In Formula 1 above, n is a natural number and R is bromoalkyl. Alternatively, the polymer comprising a haloalkyl group may be a chloromethylated styrene-ethylene-butylene-styrene (SEBS) block copolymer, which is a kind of polystyrene-based polymer, but the polymer is not limited thereto.

Specifically, the preparation method of the present invention is characterized in that a covalent bond is formed through Step 1 between the porous support consisting of the polymer comprising a reactive amine group and the polymer comprising a haloalkyl group.

In a specific embodiment of the present invention, the intermediate obtained from Step 1 was completely immersed in a solvent and maintained for 24 hours to confirm whether the polymer comprising a haloalkyl group was leached. As a result, although some polymers were leached, such as the color of the membrane becoming pale, the FTIR results showed that the polymer comprising a haloalkyl group was still present, and this indicates that a covalent bond was formed between the porous support made of a polymer comprising a reactive amine group and the polymer comprising a haloalkyl group (FIG. 6).

For example, Step 1 may be performed by further including a base so as to promote the reaction between a reactive amine group and a haloalkyl group. Specifically, the reactive amine is quaternized while forming a covalent bond to a carbon atom substituted with a halogen, which is an electrophile, through a pair of unshared electrons of the amine group, and has a positive charge. Since the added base can remove protons from the positively charged quaternary amine, the reaction described above can be promoted. However, this is only an embodiment of the reaction between a reactive amine and a haloalkyl group, and the preparation method of the present invention is not limited thereto.

For example, Step 1 above may be achieved by immersing the porous support made of a polymer comprising a reactive amine group in a casting solution, which contains a polymer comprising a haloalkyl group. This is only an embodiment of a simple process for achieving Step 1 above, and the preparation method of the present invention is not limited thereto, and any method known in the art can be applied without limitation.

For example, the casting solution may further include a crosslinking agent. The crosslinking agent to be used may be a compound comprising two or more amine groups, a compound comprising both an amine group and an imine group, a compound comprising at least one multivalent amine group, a compound comprising two or more halogen atoms, or a compound comprising two or more epoxide groups. Specifically, the crosslinking agent may be diaminohexane, imidazole or a derivative thereof, ammonia, alkylamine, dialkalamine, dibromoxylene, or diepoxide, but the crosslinking agent is not limited thereto, as long as it can mediate the binding of two or more molecules by including two or more reactive functional groups (e.g., amines, imines, halogens, epoxides, or a combination thereof) within the molecule.

For example, during performance of Step 1 for crosslinking or after Step 1, the method may further include a step of heating at a temperature of 60°C or higher, but the method is not limited thereto. In particular, the temperature may be selected by considering the type of polymer, the type of crosslinking agent, etc.

With respect to the porous support made of a polymer comprising a reactive amine group, an amine group, which is located on the surface of the porous support, forms a covalent bond through Step 1 above with the polymer comprising a haloalkyl group, which is brought into contact with the amine group, and the amine group located inside the porous support is retained as it is. In particular, not all of the haloalkyl groups also participate in the binding with amine groups, and ionic conductivity can be improved by cationizing unbound haloalkyl groups through the reaction of Step 2 above.

As used herein, the term "cation precursor compound" refers to a material which is capable of providing a cationic functional group by a reaction with haloalkyl. The cation precursor compound may be a tertiary amine (e.g., trimethylamine, etc.), ammonia, imidazole, guanidine, cobaltocene, phosphine, sulfide, or a derivative thereof, but the cation precursor compound is not limited thereto.

The cationic functional group introduced through Step 2 above may be one or more selected from the group consisting of a quaternary amine, ammonium, imidazolium, guanidinium, cobaltocenium, phosphonium, and sulfonium.

For example, Step 2 above may be achieved by allowing the intermediate obtained from Step 1 to be brought into contact with a tertiary amine, but is not limited thereto. In particular, the tertiary amine that can be used may be a trialkylamine, and specifically, trimethylamine, but the tertiary amine is not limited thereto. A simple embodiment of performing Step 2 above may be to perform by immersing the intermediate obtained from Step 1 in a trimethylamine solution, but Step 2 is not limited thereto. Further, a step of washing may be further included so as to remove unreacted tertiary amines, but the method of performing Step 2 is not limited thereto.

However, the process exemplified above is only for illustrating a method of introducing a quaternary amine group, and for the introduction of other cationic functional groups, a corresponding process known in the art may be appropriately selected and applied according to the type of functional group.

A second aspect of the present invention provides a composite ion-exchange membrane supported with a porous polymer material, which comprises a porous polymer material having a reactive amine group and a polymer comprising a haloalkyl group, wherein the composite ion-exchange membrane forms a covalent bond via the reactive amine group of the porous polymer material with part of the haloalkyl group of the polymer comprising a haloalkyl group, and the other haloalkyl group of the polymer comprising a haloalkyl group is transferred into a cationic functional group.

The composite ion-exchange membrane of the present invention may be prepared by the method of the first aspect, but the preparation method is not limited thereto.

For example, the composite ion-exchange membrane of the present invention may be an anion-exchange membrane (AEM).

A third aspect of the present invention provides a membrane-electrode assembly (MEA) equipped with the composite ion-exchange membrane described above.

The membrane-electrode assembly can be prepared by using a method known to one of ordinary skill in the art. Non-limiting examples of the method for preparing the membrane-electrode assembly may include a decal method, a spray method, a CCG method, etc.

Specifically, the non-limiting examples of the method for preparing the membrane-electrode assembly may be a method which includes: a step of coating a catalyst slurry in which a catalyst, a hydrogen ion conductive polymer, and a dispersion medium are mixed on a release film and then drying to form a catalyst layer; a step of laminating the catalyst layer formed on the release film on both surfaces of the electrolyte membrane coated with the hydrophilic solvent so that the catalyst layer is configured to face the electrolyte membrane; and a step of laminating the laminate so that the catalyst layer is brought into contact with the laminate and transferring the catalyst layer to the electrolyte membrane by hot pressing followed by removing the release film to form a membrane-electrode assembly.

A fourth aspect of the present invention provides a water electrolyzer, a flow battery, or a fuel cell, which is equipped with the membrane-electrode assembly described above.

As described above, the composite ion-exchange membrane of the present invention shows excellent dimensional stability due to significant reduction of swelling by water uptake (especially in the longitudinal direction), stable operation even at a high temperature, and excellent hydroxide ion conductivity. Therefore, the membrane-electrode assembly of the present invention can be used in a flow battery or fuel cell. In addition, the membrane-electrode assembly of the present invention can be effectively used in a water electrolyzer where it is essential to be in contact with water. The anion-exchange membrane water electrolysis cell (AEMWEC) is expected to have the effect of cost savings due to the use of a non-precious-metal catalyst and produce a high current density and high-pressure hydrogen using a polymer membrane, by simultaneously adopting the advantages of the conventional method of alkaline water electrolysis (AWE) and a polymer electrolyte membrane (PEM).

**[Advantageous Effects]**

The composite ion-exchange membrane of the present invention made of a porous support comprising a reactive amine group and a polymer, which includes a haloalkyl group and is connected to the porous support by a covalent bond, shows not only excellent hydroxide ion conductivity but also improved dimensional stability. Therefore, the membrane-electrode assembly of the present invention equipped with the composite ion-exchange membrane can be effectively used in a water electrolyzer as well as in a flow battery or fuel cell.

**[Brief Description of Drawings]**

FIG. 1 shows schematic diagrams illustrating problems related to in-plane swelling of a conventional membrane.

FIG. 2 shows an SEM image of a proton-exchange membrane, which was observed after operating a fuel cell

equipped with a conventional proton-exchange membrane. From the image, cracks were observed in the channel region.

FIG. 3 shows a schematic diagram illustrating an edge-break phenomenon in a fuel cell membrane.

FIG. 4 shows a schematic diagram illustrating a reaction between a PBI porous support and a bromoalkylated polymer, which involves quaternization of remaining bromoalkyl groups.

FIG. 5 shows an SEM image of a prepared PBI nanofiber mat.

FIG. 6 shows FTIR spectra of a composite membrane of PBI, mTPBr, and mTPBr after leaching with THF. PBI and mTPBr were allowed to react at room temperature (top), 80°C (middle), and 120°C (bottom). The bands from mTPBr were still clearly shown at 1,597 $cm^{-1}$, 1,148 $cm^{-1}$, 1,053 $cm^{-1}$, and 738 $cm^{-1}$ even after the leaching.

FIG. 7 shows SEM images of an mTP-PBI 50/80 membrane. After casting mTPBr (2+3), a PBI nanofiber mat was embedded in the film 2, and a second mTP layer was cast on the tower 1. In the middle part 2, the small, brightly colored dots shown in the high-resolution image represent the location of the PBI nanofibers.

## [DETAILED DESCRIPTION OF THE INVENTION]

Hereinafter, the present invention will be described in more detail with reference to the following Examples. However, these Examples are for illustrative purposes only, and the scope of the invention is not limited by these Examples.

### Preparation Example 1: Preparation of PBI nanofiber mat

13.5 wt% polybenzimidazole (PBI, MW 48,000, Danish Power Systems) and 0.5 wt% LiCl were dissolved in 86 wt% DMAc. The solution was electrospun at a distance of 8 cm at 40 kV and 0.458 mL/h. The mat was dried under vacuum at 160°C overnight to remove the residual solvent. The nanofiber mat has a thickness of 6 μm and a density of 0.5 g/mL, and its porosity was calculated to be 62% considering that the estimated density for PBI is 1.3 g/mL. The microstructure of the prepared PBI nanofiber mat was observed by SEM, and the obtained image is shown in FIG. 5.

### Example 1: Pore filling of PBI nanofiber mat into bromomethylated mTPBr

1 mmol of mTPBr (prepared by the method of ACS Macro Lett. 2017, 6, 5, 566-570) and 1 mmol of NaH were dissolved in 4.12 mL of THF. The solution was stirred at room temperature overnight until it was completely dissolved. The solution was cast on a glass with a doctor blade, and the thickness was adjusted to 220 μm. A PBI mat (10×10 $cm^2$) was placed on a film, and the solution was cast on the PBI mat once more to adjust the thickness to 446 μm. The cast film was dried at room temperature, 60°C, 80°C, or 120°C for 48 hours under vacuum. The thickness of the dry mTP-PBI was 50 μm. The sample was marked as mTP-PBI XX/YY, where XX represents a thickness and YY represents a drying temperature.

### Example 2: Quaternization of mTP-PBI membrane

The mTP-PBI membrane was immersed in 30 mL of trimethylamine (TMA, a 28 wt% aqueous solution, Tokyo Chemical Industry Co., Ltd.) at room temperature. After 7 days, the membrane was transferred to deionized water and left to stand overnight to remove residual TMA.

### Experimental Example 1: Leaching of mTPBr from composite membranes

The mTP-PBI membrane, which had not yet been quaternized, was completely immersed in a THF solution at room temperature for 24 hours. After the immersion, the color of the membrane turned brighter, indicating that some materials were leached. However, FTIR showed that all mTPBr was not leached, indicating that a covalent bond was formed between PBI and mTPBr (FIG. 6).

### Experimental Example 2: Measurement of conductivity

A membrane sample was clamped between two electrode chambers filled with a KOH solution, and the through-plane conductivity of the sample was measured. A gold-plated metal disk was used as an electrode. Resistance was obtained by impedance spectroscopy (Zahner IM6). The membrane resistance was calculated by subtracting the resistance of an empty cell from the measured value for the sample. The conductivity was calculated by the following equation: conductivity = thickness / (membrane resistance × area).

In-plane conductivity was measured in deionized water using a Bekktech BT-110 battery. In order to exclude

carbonates, nitrogen was continuously bubbled through the water and a voltage of 2 V was applied until the current reached a constant value. Resistance was measured by impedance spectroscopy, and the conductivity was calculated by the following equation: conductivity = distance between voltage sensing electrodes / (resistance × membrane width × membrane thickness).

The conductivity values calculated as described above are summarized in Table 1 below.

[Table 1]

| [mS/cm] | In-plane | Through-plane | | | |
|---|---|---|---|---|---|
| Membrane | Distilled Water | 0.5 M KOH | 1 M KOH | 2 M KOH | 4 M KOH |
| mTP-PBI 1000/60 | - | 38.6 | 68.5 | 89.7 | 64.9 |
| mTP-PBI 50/80 | 34.1 | 31.3 | 39.8 | 65.9 | 60.9 |
| mTP-PBI 50/120 | - | 30.2 | 34.1 | 70.7 | 68.3 |
| Dense PBI | - | 0.03 | 1.2 | 14.0 | 42.4 |

**Experimental Example 3: Measurement of water uptake and swelling**

mTPBr and mTP-PBI membranes (1×4 $cm^2$) were each placed in a vial filled with a 1 M NaCl solution to convert these membranes to a chloride form. After 10 hours, the solution was exchanged with distilled water and further maintained at room temperature for 24 hours. Samples reinforced with a PBI nanofiber mat and samples not reinforced with a PBI nanofiber mat were allowed to swell in water at room temperature, and their wet weights and dimensions were measured. Thereafter, these samples were dried, and their dry weights and dimensions were measured. Then, the same samples were allowed to swell in water at 60°C, and their weights and dimensions were measured in wet and dry conditions through the drying process.

From the values measured in the wet and dry conditions, the water uptake and swelling values were calculated by the following equations, and the values measured at room temperature and 60°C are shown in Tables 2 and 3 below, respectively. These values clearly showed that a) the addition of a PBI nanofiber mat reduces water uptake and swelling, and that b) a higher drying/reaction temperature reduces water uptake and swelling.

$$\text{water uptake}\,(\%) = \frac{w_{wet} - w_{dry}}{w_{dry}} \times 100$$

$$\text{swelling in thickness}\,(\%) = \frac{d_{wet} - d_{dry}}{d_{dry}} \times 100$$

$$\text{swelling in length}\,(\%) = \frac{L_{wet} - L_{dry}}{L_{dry}} \times 100$$

In the above equations, w represents a weight, d represents a thickness, and L represents a length.

[Table 2]

| Membrane | Water Uptake @ RT (%) | Swelling Rate @ RT (%) | | |
|---|---|---|---|---|
| | | Thickness | Length | Volume |
| mTP 50/80 | 64.69±8.35 | 8.39±2.56 | 3.36±0.77 | 15.78±2.78 |
| mTP-PBI 50/80 | 41.84±7.72 | 4.40±3.85 | 4.49±1.60 | 13.99±5.03 |

(continued)

| Membrane | Water Uptake @ RT (%) | Swelling Rate @ RT (%) | | |
|---|---|---|---|---|
| | | Thickness | Length | Volume |
| mTP 50/120 | 36.87±3.59 | 8.10±3.61 | 2.64±0.16 | 13.89±4.16 |
| mTP-PBI 50/120 | 28.52±7.30 | 2.82±2.56 | 2.95±1.77 | 9.06±6.26 |

[Table 3]

| Membrane | Water Uptake @ 60 °C (%) | Swelling Rate @ 60°C (%) | | |
|---|---|---|---|---|
| | | Thickness | Length | Volume |
| mTP 50/80 | 91.18±8.96 | 20.39±5.19 | 10.52±1.96 | 40.90±4.71 |
| mTP-PBI 50/80 | 71.83±1.99 | 11.69±3.67 | 3.60±0.21 | 19.88±4.44 |
| mTP 50/120 | 60.55±4.27 | 19.24±3.87 | 6.27±1.38 | 34.66±5.31 |
| mTP-PBI 50/120 | 50.86±2.72 | 13.71±0.11 | 2.56±2.64 | 19.66±6.28 |

## Claims

**1.** A method of preparing a composite ion-exchange membrane supported with a porous polymer material, comprising:

Step 1, in which a porous support made of a polymer comprising a reactive amine group is brought into contact with a polymer comprising a haloalkyl group; and
Step 2, in which an intermediate obtained from Step 1 is reacted with a cation precursor compound to introduce a cationic functional group to the haloalkyl group, which is not reacted in the previous step.

**2.** The method of claim 1, wherein the porous support made of a polymer comprising a reactive amine group is in the form of a porous mat prepared by electrospinning the polymer comprising a reactive amine group.

**3.** The method of claim 1 or 2, wherein the porous support has a porosity of 30% to 90%.

**4.** The method of one of claims 1 to 3, wherein the polymer comprising a reactive amine group is selected from the group consisting of polybenzimidazole (PBI), polybenzoxazole, poly(pyridine), poly(pyrimidine), polyoxadiazoles, polyquinolines, polyquinoxalines, polythiadiazoles, polytriazoles, and a derivative thereof.

**5.** The method of one of claims 1 to 4, wherein a covalent bond is formed through Step 1 between the porous support consisting of the polymer comprising a reactive amine group and the polymer comprising a haloalkyl group.

**6.** The method of one of claims 1 to 5, wherein Step 1 is performed by further comprising a base.

**7.** The method of one of claims 1 to 6, wherein Step 1 is performed by immersing the porous support consisting of the polymer comprising a reactive amine group into a casting solution containing the polymer comprising a haloalkyl group.

**8.** The method of claim 7, wherein the casting solution further comprises a crosslinking agent.

**9.** The method of claim 8, wherein the crosslinking agent is a compound comprising two or more amine groups, a compound comprising both an amine group and an imine group, a compound comprising at least one multivalent amine group, a compound comprising two or more halogen atoms, or a compound comprising two or more epoxide groups.

**10.** The method of one of claims 1 to 9, wherein, during performance of Step 1 for crosslinking or after Step 1, the method further comprises a step of heating at a temperature of 60°C or higher.

**11.** A composite ion-exchange membrane supported with a porous polymer material, comprising a porous polymer material having a reactive amine group and a polymer comprising a haloalkyl group,
wherein the composite ion-exchange membrane forms a covalent bond via the reactive amine group of the porous polymer material with part of the haloalkyl group of the polymer comprising a haloalkyl group, and the other haloalkyl group of the polymer comprising a haloalkyl group is transferred into a cationic group.

**12.** The composite ion-exchange membrane of claim 11, which is prepared by the method of any one of claims 1 to 10.

**13.** A membrane-electrode assembly (MEA) equipped with the composite ion-exchange membrane of claim 11.

**14.** A water electrolyzer, flow battery, or fuel cell equipped with the membrane or membrane-electrode assembly (MEA) of claim 13.

[FIG. 1]

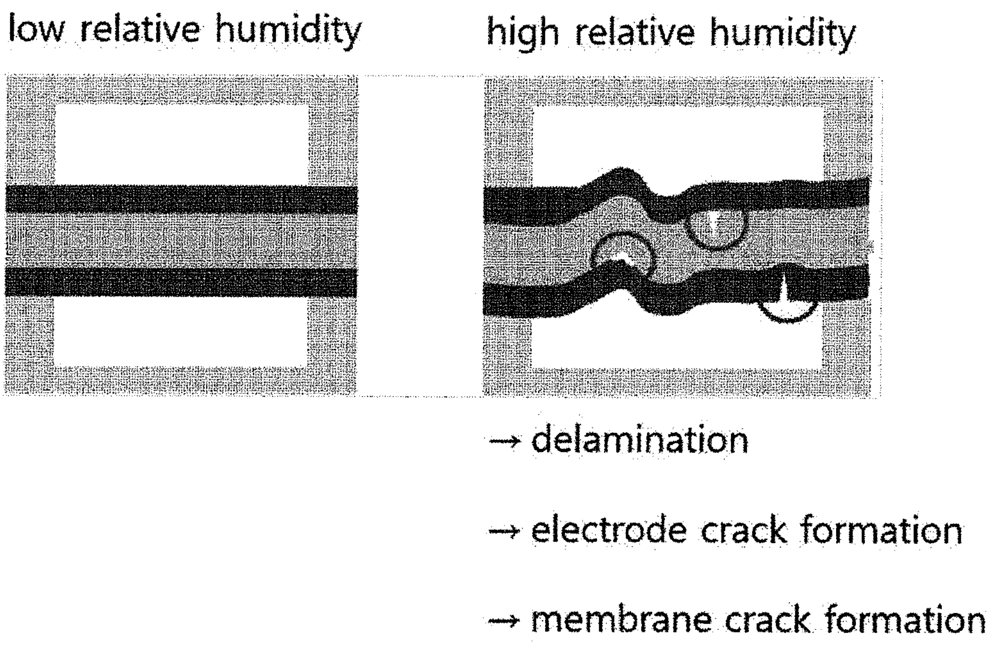
low relative humidity
high relative humidity
→ delamination
→ electrode crack formation
→ membrane crack formation

[FIG. 2]

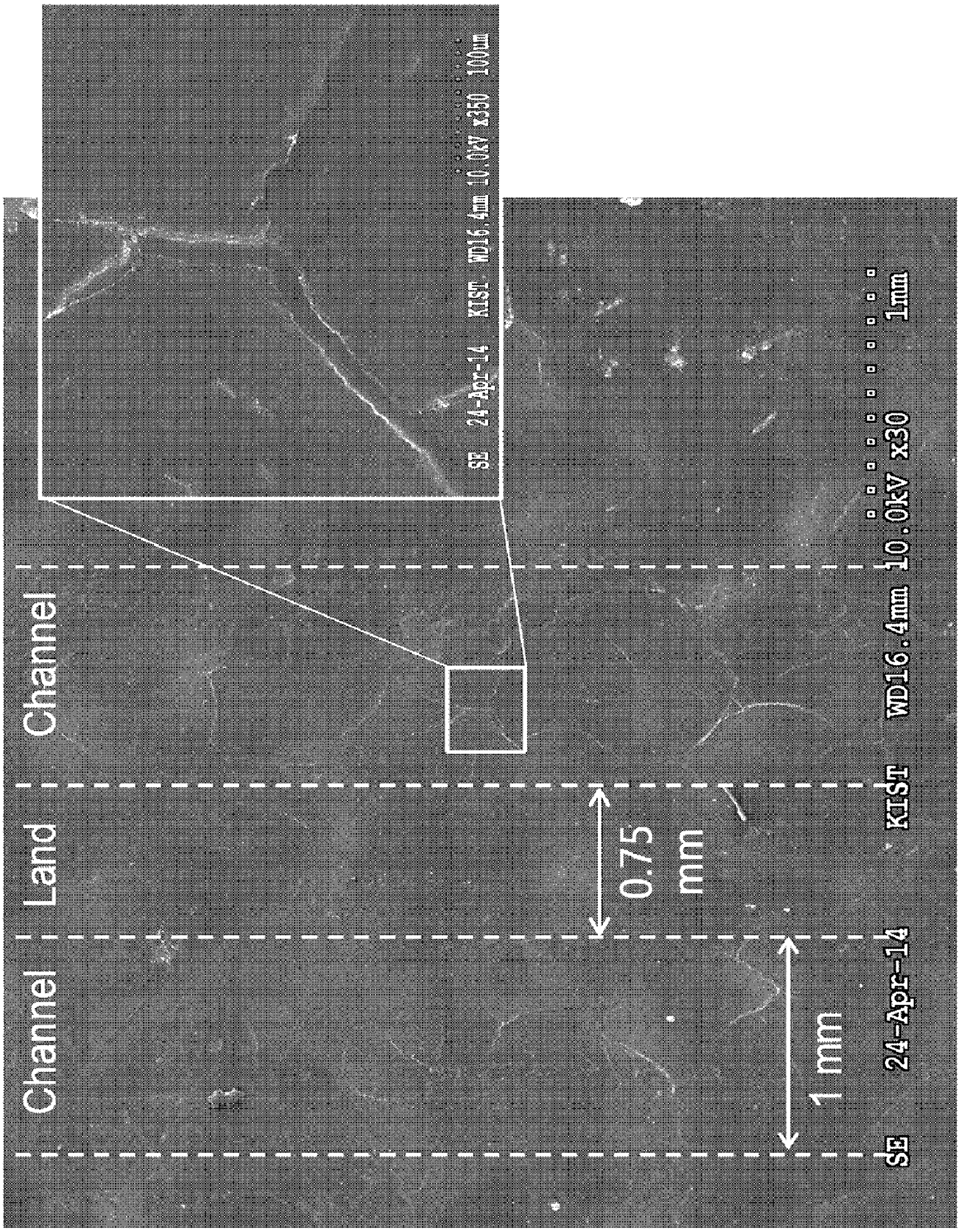
Channel
Land
Channel
0.75 mm
1 mm
SE 24-Apr-14 KIST WD16.4mm 10.0kV x30 1mm
SE 24-Apr-14 KIST WD16.4mm 10.0kV x350 100um

[FIG. 3]

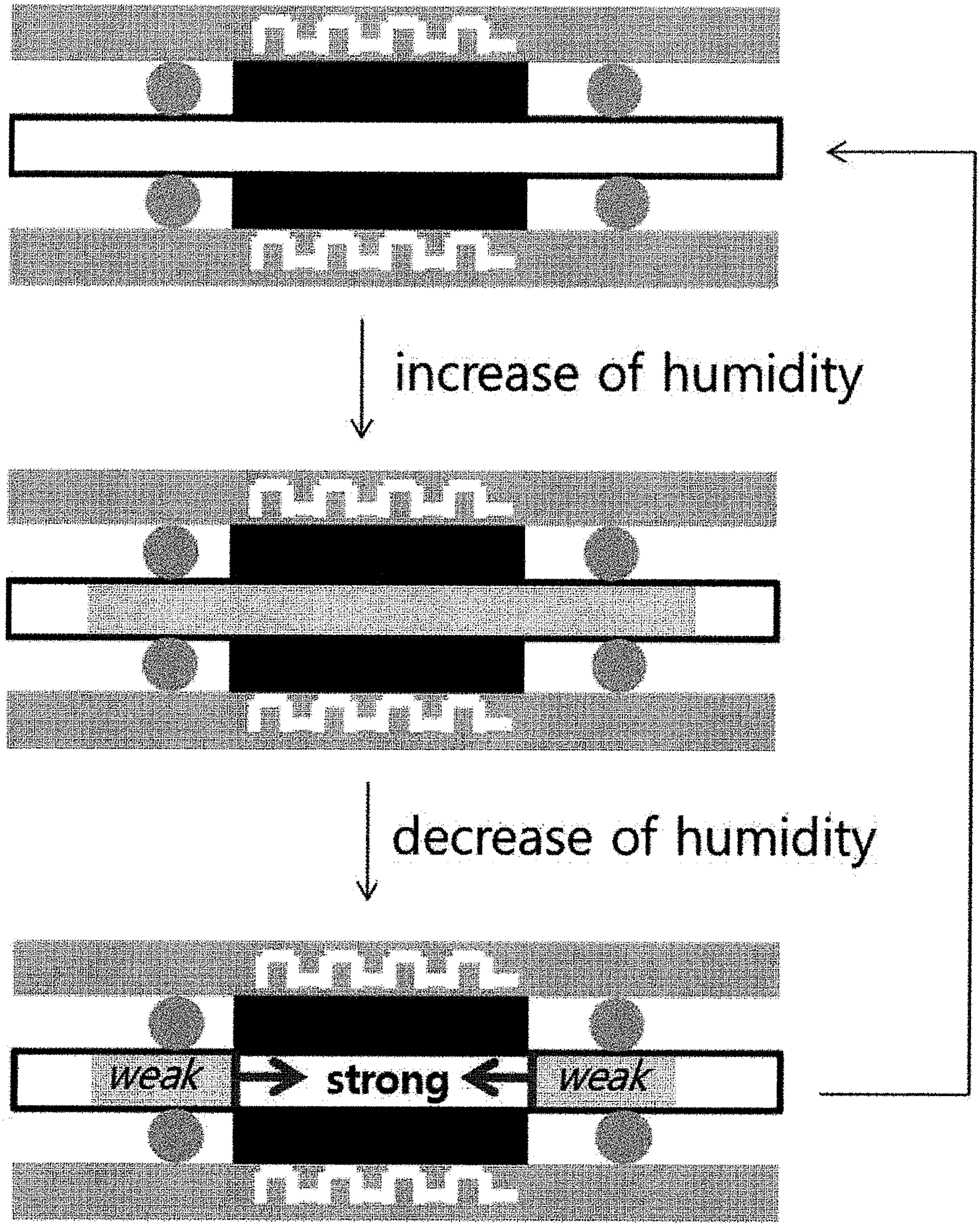
increase of humidity
decrease of humidity
weak
strong
weak

[FIG. 4]

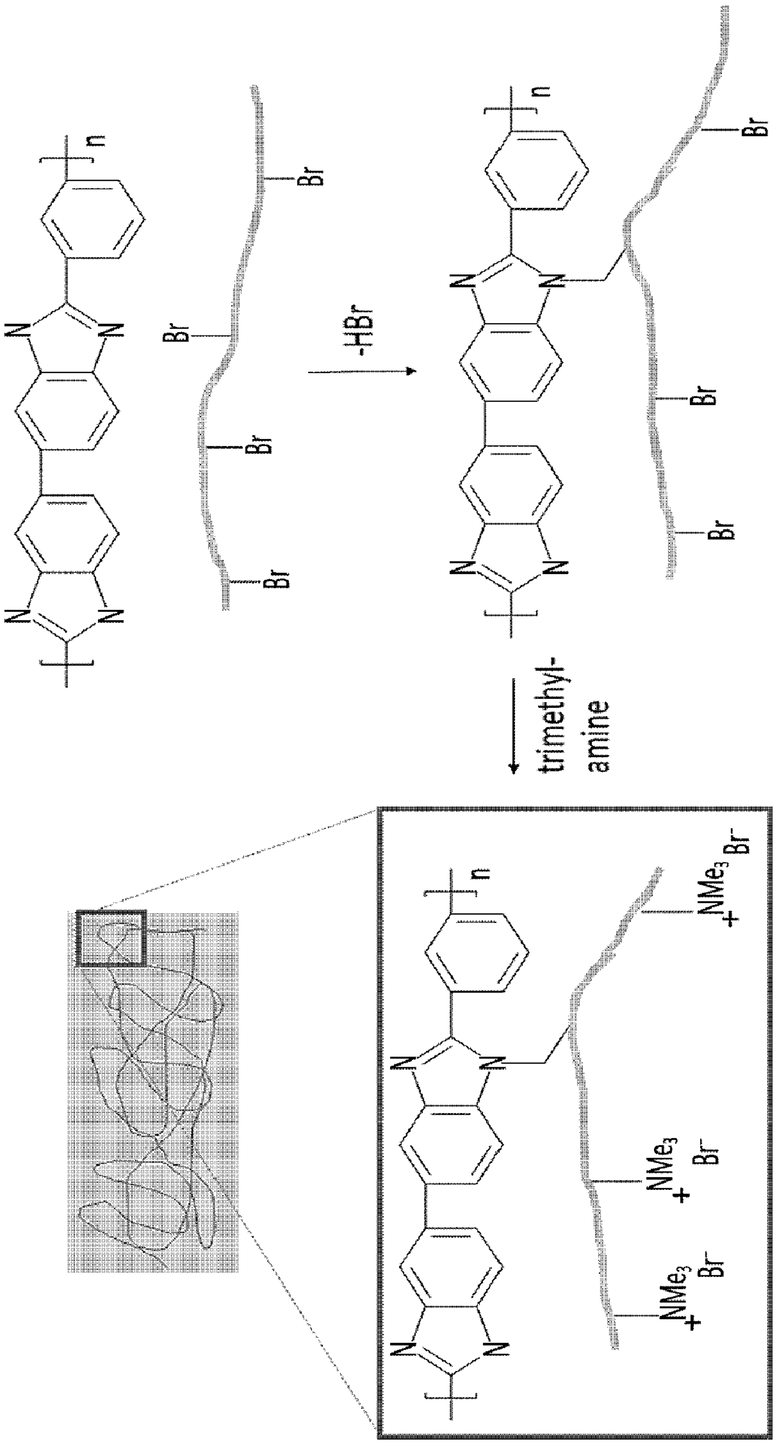

[FIG. 5]

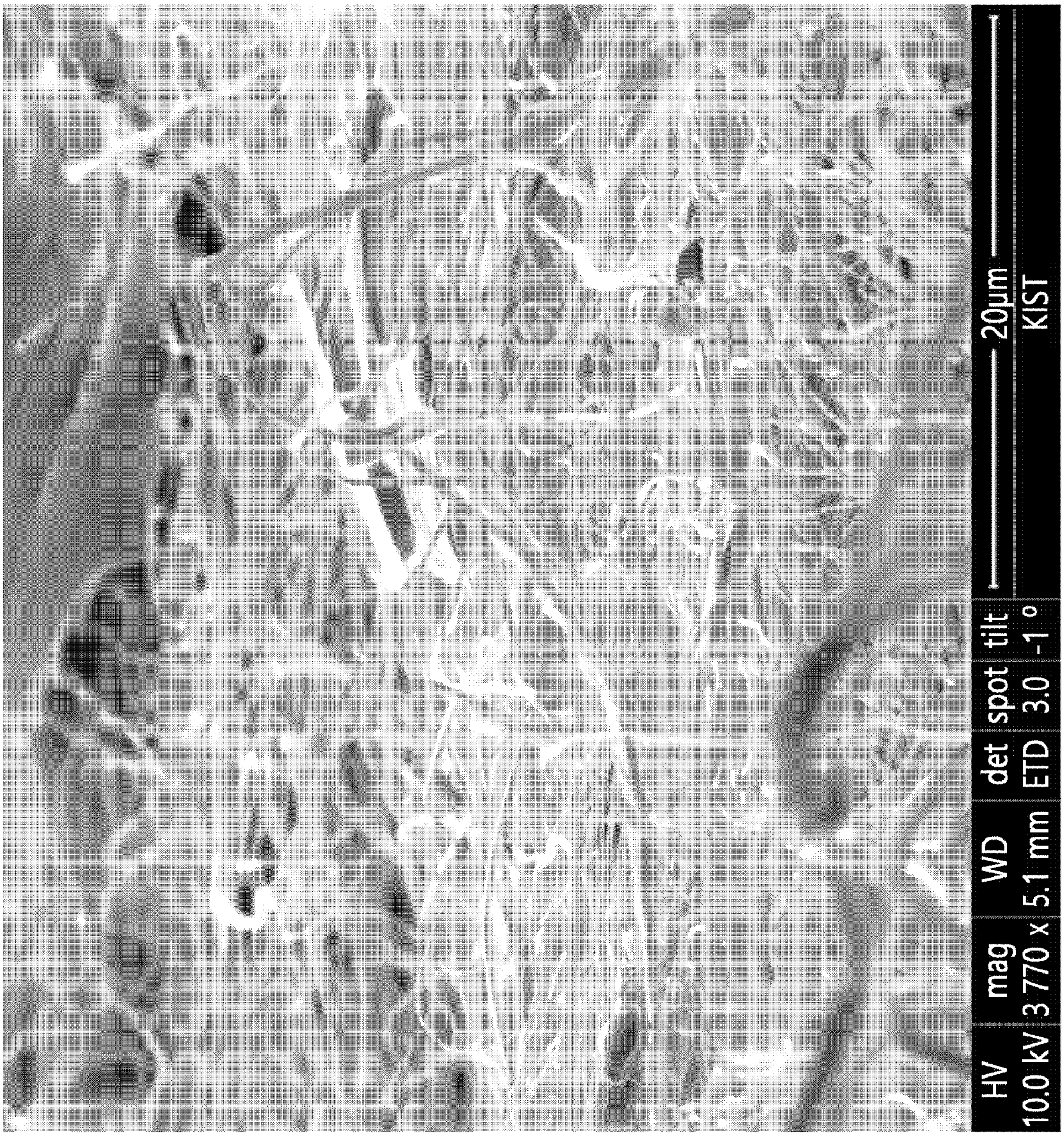

[FIG. 6]

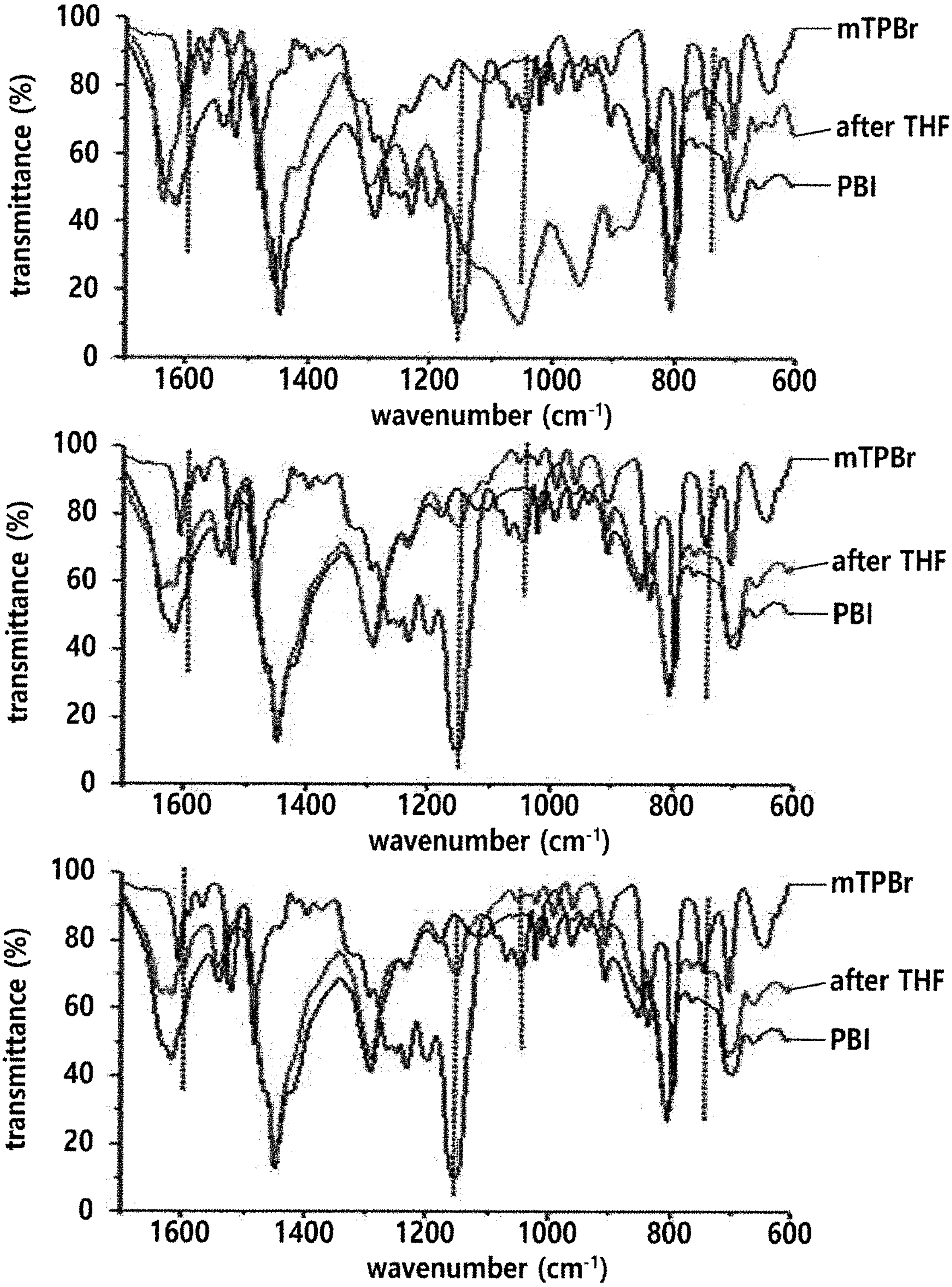

100
80
60
40
20
0
transmittance (%)
1600
1400
1200
1000
800
600
wavenumber (cm-1)
mTPBr
after THF
PBI

[FIG. 7]

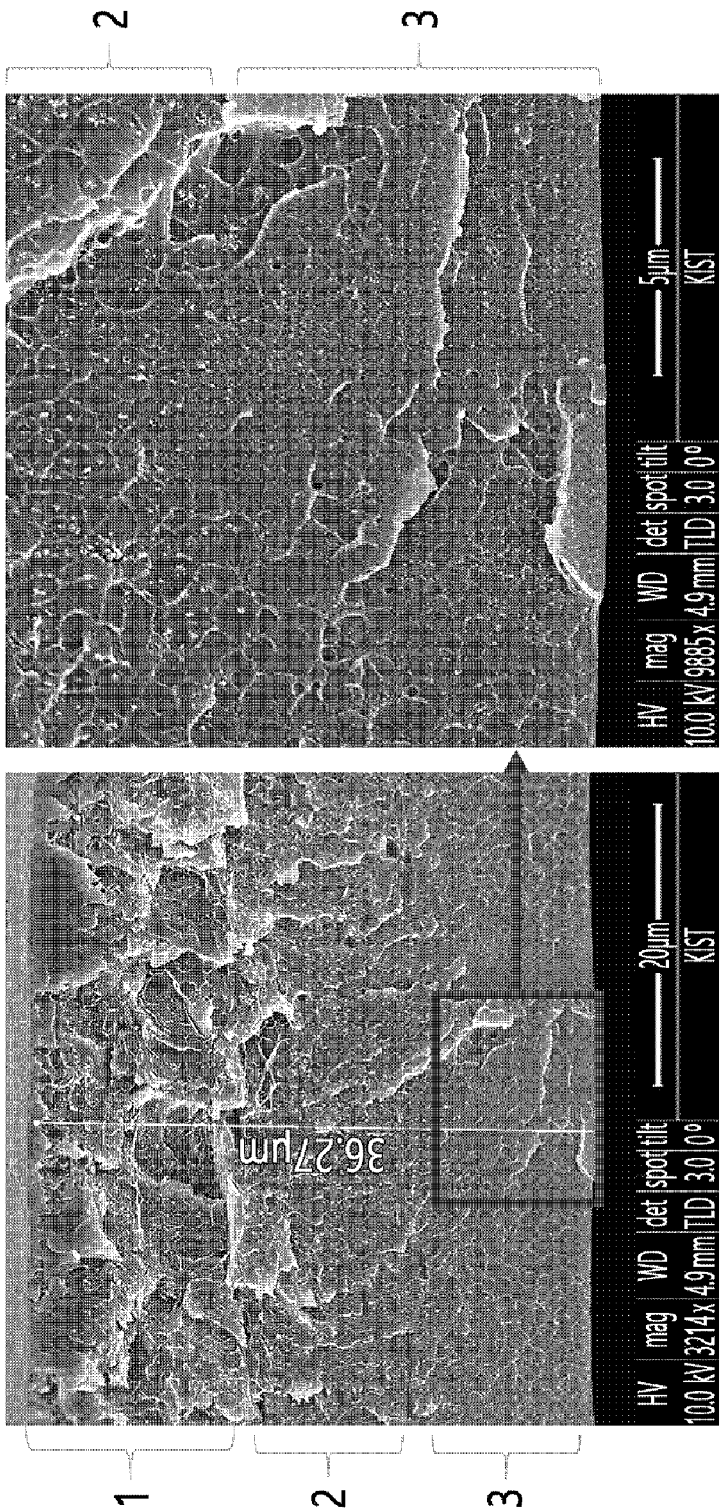
2
3
HV mag WD det spot tilt
10.0 kV 9885x 4.9mm TLD 3.0 0°
5μm
KIST
1
2
3
36.27μm
HV mag WD det spot tilt
10.0 kV 3214x 4.9mm TLD 3.0 0°
20μm
KIST

Europäisches Patentamt
European Patent Office
Office européen des brevets

# EUROPEAN SEARCH REPORT

Application Number
EP 21 15 2812

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2017/114196 A1 (HÄRING THOMAS [DE] ET AL) 27 April 2017 (2017-04-27)<br>* claim all; figures 1,8,10,12; examples 2-6,8-10 *<br>----- | 11-14<br>1-10 | INV.<br>H01M8/1072<br>C25B9/23<br>H01M8/1025<br>H01M8/1027<br>H01M8/1032<br>H01M8/106<br>H01M8/18<br><br>ADD.<br>H01M8/1018 |
| A | JINGSHUAI YANG ET AL: "Crosslinked Hexafluoropropylidene Polybenzimidazole Membranes with Chloromethyl Polysulfone for Fuel Cell Applications",<br>ADVANCED ENERGY MATERIALS,<br>vol. 3, no. 5,<br>31 January 2013 (2013-01-31), pages 622-630, XP055231653,<br>DE<br>ISSN: 1614-6832, DOI: 10.1002/aenm.201200710<br>* the whole document *<br>----- | 1-14 | |
| A | WANG SHUANG ET AL: "Macromolecular cross-linked polybenzimidazole based on bromomethylated poly (aryl ether ketone) with enhanced stability for high temperature fuel cell applications",<br>JOURNAL OF POWER SOURCES, ELSEVIER SA, CH,<br>vol. 243, 11 June 2013 (2013-06-11), pages 102-109, XP028693504,<br>ISSN: 0378-7753, DOI: 10.1016/J.JPOWSOUR.2013.05.181<br>* the whole document *<br>----- | 1-14 | TECHNICAL FIELDS SEARCHED (IPC)<br>C25B<br>H01M |

The present search report has been drawn up for all claims

1

| Place of search | Date of completion of the search | Examiner |
|---|---|---|
| Munich | 29 June 2021 | Götz, Heide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 15 2812

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2021

| Patent document cited in search report | Publication date | Patent family member(s) | Publication date |
| --- | --- | --- | --- |
| US 2017114196 A1 | 27-04-2017 | DE 102014009170 A1 | 17-12-2015 |
| | | EP 3155674 A2 | 19-04-2017 |
| | | JP 2017528579 A | 28-09-2017 |
| | | US 2017114196 A1 | 27-04-2017 |
| | | WO 2015188806 A2 | 17-12-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- *ACS Macro Lett.,* 2017, vol. 6 (5), 566-570